# EUROPEAN PATENT APPLICATION

(11) **EP 3 702 135 A1**
(43) Date of publication of application: **02.09.2020**
(21) Application number: 20158154.3
(22) Date of filing: 19.02.2020
(51) Int. Cl.: B29C 64/393

(54) **SHAPING DEVICE, SYSTEM, AND METHOD**

(30) Priority: 27.02.2019 JP 2019034664
(71) Applicant: Ricoh Company, Ltd., Tokyo 143-8555 (JP)
(72) Inventor: YAMAMOTO, Norihiro, Tokyo, 143-8555 (JP)
(74) Representative: SSM Sandmair

(57) **Abstract**

A shaping device (100) is configured to shape a three-dimensional shaped object. The shaping device (100) includes a measuring unit (340) and a correcting unit (340). The measuring unit (340) is configured to measure a shape of a shaping layer. The correcting unit (340) is configured to correct operation of shaping a shaping layer, according to a first correction amount based on a measurement result of the measuring unit (340) and a second correction amount in accordance with a past correction.

## Description

### BACKGROUND OF THE INVENTION

### 1. Field of the Invention

The present invention relates to a shaping device, a system, and a method.

### 2. Description of the Related Art

A shaping device (what is called a "three-dimensional (3D) printer") that shapes a three-dimensional shaped object based on input data has been developed. As a method of shaping a three-dimensional object, various methods have been proposed, such as Fused Filament Fabrication (FFF), Selective Laser Sintering (SLS), Material Jetting (MJ), Electron Beam Melting (EBM), and a stereolithography apparatus (SLA).

However, in some cases, it is difficult to shape a desired three-dimensional shaped object due to contraction of a shaping material.

For example, Japanese Patent No. 6077717 discloses a technology for adding a contraction control structure in order to prevent contraction of a shaped object due to reduction in temperature.

However, in Japanese Patent No. 6077717, if a three-dimensional shaped object has a complex shape, it is difficult to add the contraction control structure, and therefore, in some cases, it is still difficult to shape a desired three-dimensional shaped object.

The present invention has been conceived in view of the foregoing situations in the conventional technology, and an object is to provide a shaping device, a system, a method, and a computer readable recording medium for shaping a desired three-dimensional shaped obj ect.

### SUMMARY OF THE INVENTION

According to an aspect of the present invention, a shaping device is configured to shape a three-dimensional shaped object. The shaping device includes a measuring unit and a correcting unit. The measuring unit is configured to measure a shape of a shaping layer. The correcting unit is configured to correct operation of shaping a shaping layer, according to a first correction amount based on a measurement result of the measuring unit and a second correction amount in accordance with a past correction.

### BRIEF DESCRIPTION OF THE DRAWINGS

FIGS. 1A to 1C are diagrams illustrating a schematic configuration of an entire three-dimensional shaping system according to an embodiment of the present invention;
FIG. 2 is a diagram illustrating a hardware configuration included in a shaping device of the embodiment;
FIG. 3 is a block diagram of pieces of software included in the shaping device of the embodiment;
FIGS. 4A to 4C are diagrams illustrating an example of a shape error of a three-dimensional shaped object that is shaped by general feedback control;
FIG. 5 is a diagram illustrating a data flow in a first embodiment;
FIG. 6 is a diagram for explaining a detailed data flow in an FB correction vector output unit;
FIG. 7 is a diagram for explaining a detailed data flow in a correcting unit;
FIG. 8 is a flowchart of a process performed by the shaping device;
FIGS. 9A and 9B are diagrams for explaining a shape error depending on whether FF correction of the first embodiment is performed;
FIG. 10 is a diagram illustrating a data flow in a second embodiment;
FIG. 11 is a diagram for explaining a shape error depending on whether FF correction of the second embodiment is performed;
FIG. 12 is a diagram illustrating a data flow according to a third embodiment; and
FIG. 13 is a diagram illustrating a data flow according to a fourth embodiment.

The accompanying drawings are intended to depict exemplary embodiments of the present invention and should not be interpreted to limit the scope thereof. Identical or similar reference numerals designate identical or similar components throughout the various drawings.

### DESCRIPTION OF THE EMBODIMENTS

The terminology used herein is for the purpose of describing particular embodiments only and is not intended to be limiting of the present invention.

As used herein, the singular forms "a", "an" and "the" are intended to include the plural forms as well, unless the context clearly indicates otherwise.

In describing preferred embodiments illustrated in the drawings, specific terminology may be employed for the sake of clarity. However, the disclosure of this patent specification is not intended to be limited to the specific terminology so selected, and it is to be understood that each specific element includes all technical equivalents that have the same function, operate in a similar manner, and achieve a similar result.

An embodiment of the present invention will be described in detail below with reference to the drawings. Hereinafter, first to fourth embodiments of the present invention will be described, but the present invention is not limited to each of the embodiments described below. In the drawings to be referred to in the following description, the same components are denoted by the same reference symbols, and explanation thereof will be appropriately omitted. Further, in the following, the present invention will be described mainly using a shaping device based on an FFF method, but embodiments are not limited thereto, and the present invention is applicable to shaping devices using methods other than the FFF method.

Furthermore, in the following, for convenience of explanation, a height direction of a three-dimensional shaped object is referred to as a z-axis direction, and a plane perpendicular to the z-axis is referred to as an xy plane.

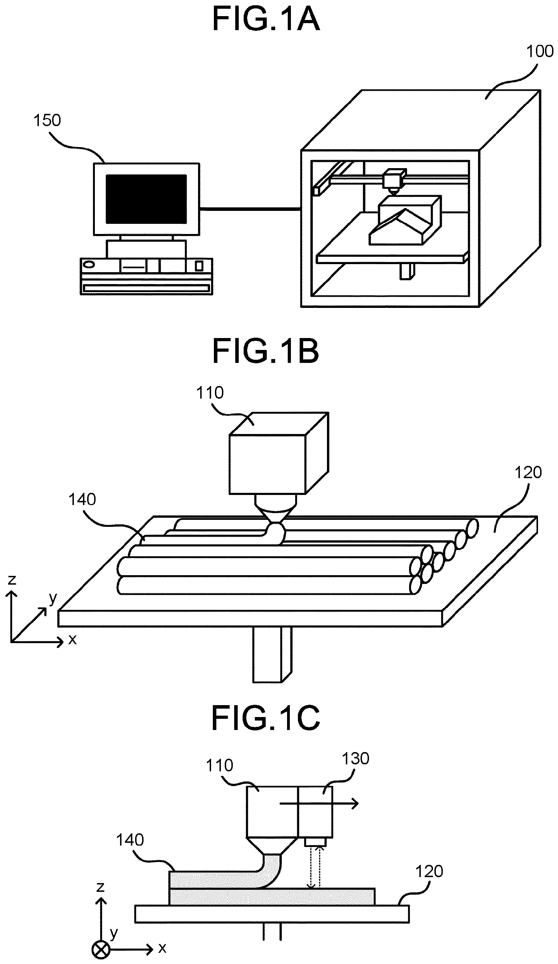

FIGS. 1A to 1C are diagrams illustrating a schematic configuration of an entire three-dimensional shaping system according to an embodiment of the present invention. As illustrated in FIG. 1A, the three-dimensional shaping system includes a shaping device 100 that shapes a three-dimensional shaped object. The shaping device 100 receives shape data of a three-dimensional shaped object to be shaped, which is transmitted from, for example, an information processing terminal 150, and shapes the three-dimensional shaped object based on the shape data. Further, the information processing terminal 150 may operate as a control device that controls processes performed by the shaping device 100. Furthermore, functions of the information processing terminal 150 may be incorporated in the shaping device 100.

As illustrated in FIG. 1B, a shaping material 140 is ejected onto a stage 120 from a head 110 that can move parallel to the xy plane, and a shaping layer is shaped on the xy plane. By drawing one-dimensional lines in the same plane, a shaping layer as a single layer of a three-dimensional shaped object is shaped. After a first shaping layer is shaped, the stage 120 is lowered by a height of the single layer (deposition pitch) along the z-axis. Thereafter, the head 110 drives in the same manner as for the first layer, and a second shaping layer is shaped. The shaping device 100 deposits the shaping layers and shapes the three-dimensional shaped object by repeating the operation as described above. While a configuration in which the head 110 moves in the xy plane and the stage 120 moves in the z-axis direction has been described, embodiments are not limited to the configuration as described above, and it may be possible to adopt different configurations.

Further, the shaping device 100 of the present embodiment includes a sensor 130 that measures a shape of a shaping layer during shaping or a shape of a three-dimensional shaped object after shaping. The sensor 130 may measure the xy plane of the shaping layer. As illustrated in FIG. 1C, in a preferred embodiment, the sensor 130 may measure a shape of a shaping layer during shaping in conjunction with shaping operation performed by the head 110, for example. Further, the three-dimensional shaped object may be measured every time a single shaping layer is shaped. Meanwhile, it is possible to arbitrarily select timing and a range of measurement of the three-dimensional shaped object, and embodiments are not specifically limited.

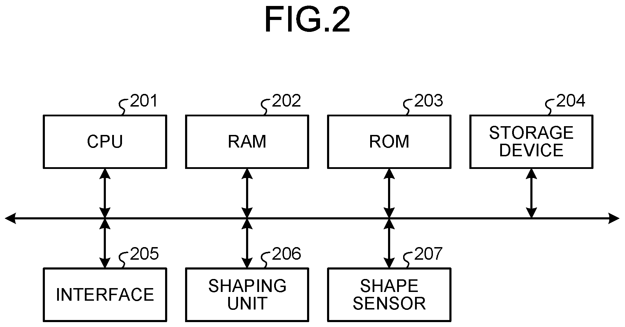

A hardware configuration of the shaping device 100 will be described below. FIG. 2 is a diagram illustrating a hardware configuration included in the shaping device 100 of the present embodiment. The shaping device 100 includes a central processing unit (CPU) 201, a random access memory (RAM) 202, a read only memory (ROM) 203, a storage device 204, an interface 205, a shaping unit 206, and a shape sensor 207. All pieces of hardware are connected to one another via a bus.

The CPU 201 is a device that executes a program for controlling operation of the shaping device 100 and performs a predetermined process. The RAM 202 is a volatile storage device for providing an execution space for the program to be executed by the CPU 201, and is used for storing and loading programs and data. The ROM 203 is a non-volatile storage device for storing the program executed by the CPU 201 and firmware.

The storage device 204 is a rewritable non-volatile storage device for storing an operating system (OS) that enables the shaping device 100, various applications, setting information, various kinds of data, and the like. The interface 205 is a device for connecting the shaping device 100 to other apparatuses. The interface 205 is able to connect to, for example, the information processing terminal 150, a network, an external storage device, and the like, and it is possible to receive control data for shaping operation, shape data of a three-dimensional shaped object, and the like via the interface 205.

The shaping unit 206 is a device that serves as a shaping means and shapes a shaping layer based on shaping data. The shaping unit 206 includes the head 110, the stage 120, and the like, and is configured in accordance with a shaping method. For example, the shaping unit 206 based on the FFF method includes a heating mechanism that melts the shaping material 140, a nozzle for ejecting the shaping material 140, and the like. The shaping unit 206 based on an SLS method includes a laser light source and the like.

The shape sensor 207 is a device that measures a shape of a shaping layer during shaping or a shape of a three-dimensional shaped object after shaping. The shape sensor 207 may measure the xy plane of a shaping layer. Further, the shape sensor 207 may measure dimensions of a three-dimensional shaped object in an x-axis direction, a y-axis direction, and the z-axis direction. Examples of the shape sensor 207 include an infrared sensor, a camera, and a 3D measurement sensor (for example, a light-sectioning profile sensor).

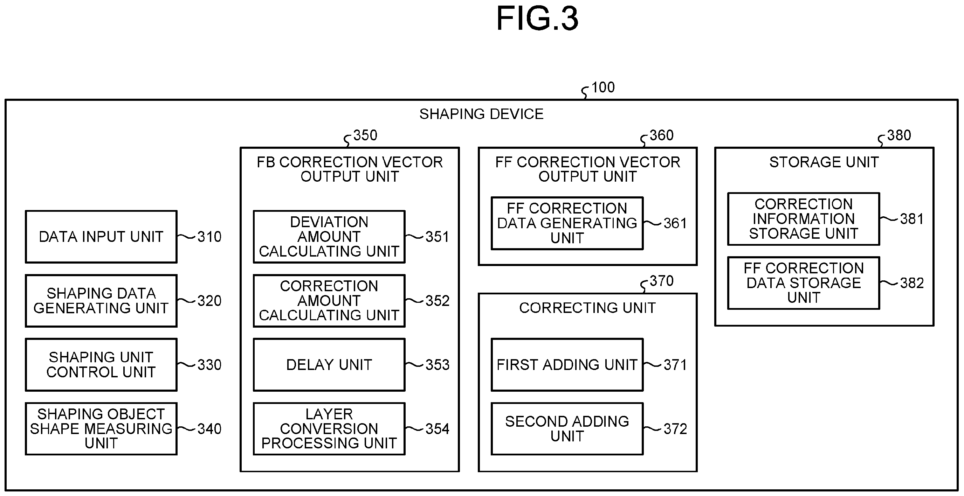

Functional means implemented by each piece of hardware according to the present embodiment will be described below with reference to FIG. 3. FIG. 3 is a block diagram of pieces of software included in the shaping device 100 of the present embodiment.

The shaping device 100 includes a data input unit 310, a shaping data generating unit 320, a shaping unit control unit 330, a shaped object shape measuring unit 340, a feedback (FB) correction vector output unit 350, a feedforward (FF) correction vector output unit 360, a correcting unit 370, and a storage unit 380.

The data input unit 310 is a means that receives input of shape data for shaping a three-dimensional shaped object, or the like. As one example, the shape data is generated by the information processing terminal 150 or the like, and input to the data input unit 310 via the interface 205.

The shaping data generating unit 320 is a means that divides the shape data, which is input to the data input unit 310, in a height direction of the three-dimensional shaped object, and generates pieces of shaping data (what is called slice data) of a plurality of shaping layers. The shaping data is generated by dividing a target three-dimensional shaped object by the deposition pitch, as data that indicates a shape of a shaping layer and that is used to shape each of layers to be deposited. The shaping data may be binary data that indicates whether shaping is performed or not at a coordinate on the xy plane of each of layers. Further, in a preferred embodiment, it may be possible to include not only information on whether to perform shaping at each of coordinates, but also a shaping amount and an ejection amount of the shaping material 140 at each of the coordinates. In FIG. 3, the shaping data generating unit 320 is included in the shaping device 100, but may be included in the information processing terminal 150. In this case, the shaping data generated by the information processing terminal 150 is transmitted to the shaping device 100, and a shaping process is performed.

The shaping unit control unit 330 is a means that controls shaping operation performed by the shaping unit 206, on the basis of the shaping data. The shaping unit control unit 330 is able to perform shaping while controlling algorithms and various parameters, such as a shaping speed and a deposition pitch, by adjusting the position of the head 110 and the height of the stage 120 on the basis of the shaping data. Further, the shaping unit control unit 330 is able to control a shaping amount on the basis of the shaping data. For example, in the FFF method, it is possible to control the ejection amount of the shaping material 140, and, in the SLS method, it is possible to control intensity of laser. Meanwhile, the shaping unit control unit 330 may control the shaping unit 206 on the basis of the shaping data output by the shaping data generating unit 320, or may control the shaping unit 206 on the basis of shaping data (corrected shaping data) for which a shaping shape is corrected by the correcting unit 370.

The shaped object shape measuring unit 340 is a means, as a measuring means, that controls the shape sensor 207 and measures measurement data, such as a dimension and a height, as a shape of a shaping layer during shaping or a shape of a three-dimensional shaped object after shaping. The shaped object shape measuring unit 340 acquires a measurement result as the measurement data.

The FB correction vector output unit 350 serves as a calculation means and outputs, as a feedback (FB) correction vector, the measurement data and a first correction amount that is calculated based on the shaping data. The FB correction vector output unit 350 includes a deviation amount calculating unit 351, a correction amount calculating unit 352, a delay unit 353, and a layer conversion processing unit 354. The deviation amount calculating unit 351 calculates, as a deviation amount, a difference between the shaping data and the measurement data, and outputs a difference vector. The correction amount calculating unit 352 calculates a correction vector corresponding to the measured shaping layer on the basis of the difference vector. The delay unit 353 is a means that outputs input shaping data in a one-layer delayed manner. The delay unit 353 is configured with, for example, a buffer memory. The layer conversion processing unit 354 calculates a first correction amount that is needed to shape a desired shape, on the basis of the correction vector calculated by the correction amount calculating unit 352 and shaping data of an n-th layer. The first correction amount is output, as an FB correction vector, to the correcting unit 370. Meanwhile, the FB correction vector may be stored in the storage unit 380.

The FF correction vector output unit 360 serves as a calculation means and outputs a feedforward (FF) correction vector. The FF correction vector output unit 360 includes an FF correction data generating unit 361 that generates FF correction data. The FF correction data generating unit 361 analyzes the FB correction vector of a shaping layer that has been shaped in the past or information on other kinds of correction, and generates FF correction data, as a second correction amount, for correcting a shaping layer that is to be shaped next or later. Further, the generated FF correction data is stored in the storage unit 380. The FF correction vector output unit 360 reads the FF correction data from the storage unit 380 at a timing at which a correction process is performed, multiplies the FF correction data by an FF gain, and outputs the second correction amount, as an FF correction vector, to the correcting unit 370. Meanwhile, as one example, the FF gain may be a parameter that determines a weight of FF correction in a series of correction processes. For example, if a storage amount of pieces of FF correction data is small and reliability is not adequate, it is possible to perform more appropriate correction by reducing the FF gain and reducing the degree of FF correction in the correction processes.

The correcting unit 370 is a means that corrects the shaping data to achieve a desired shape of a shaping layer, on the basis of the FB correction vector and the FF correction vector. Accordingly, it is possible to improve accuracy of the shaping layer. The correcting unit 370 includes a first adding unit 371 and a second adding unit 372. The first adding unit 371 adds the FB correction vector and the FF correction vector, and outputs, as a third correction amount, a correction vector. Meanwhile, the correction vector may be stored in the storage unit 380. The second adding unit 372 corrects the shaping data on the basis of the correction vector. Accordingly, the shaping operation is corrected based on the shaping data that has been corrected. In other words, the shaping data that has been corrected is output, as the corrected shaping data, to the shaping unit control unit 330.

The storage unit 380 is a means that controls the storage device 204 and stores therein various kinds of data. The storage unit 380 includes a correction information storage unit 381 and an FF correction data storage unit 382. The correction information storage unit 381 is able to store therein the correction vector, the FB correction vector, the difference vector, and the like. The FF correction data storage unit 382 stores therein the FF correction data generated by the FF correction data generating unit 361.

With each of the functional means as described above, it is possible to shape a three-dimensional shaped object with high accuracy. Meanwhile, the above-described software blocks correspond to functional means that are implemented by causing the CPU 201 to execute a program of the present embodiment to cause each piece of hardware to function. Further, all of the functional means described in each of the embodiments may be realized by software, or a part or all of the functional means may be mounted as hardware that provide corresponding functions.

Furthermore, all of the above-described functional means need not always be included in the shaping device 100 as in the configuration as illustrated in FIG. 3. For example, in other preferred embodiments, each of the above-described functional means may be realized by cooperation of the shaping device 100 and the information processing terminal 150.

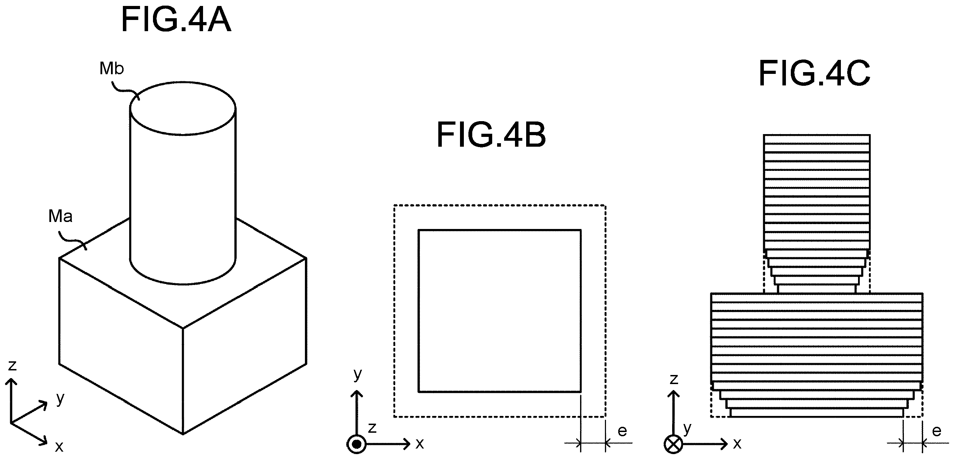

FIGS. 4A to 4C are diagrams illustrating an example of a shape error of a three-dimensional shaped object that is shaped by general feedback control. FIG. 4A is a perspective view illustrating a shape of a desired three-dimensional shaped object to be shaped by the shaping device 100. In the example illustrated in FIGS. 4A to 4C, the three-dimensional shaped object is constructed of a cuboid portion Ma and a cylindrical portion Mb that is arranged on the cuboid portion Ma.

FIG. 4B is a top view illustrating an example of a shape error that occurs when a single shaping layer of the cuboid portion Ma is shaped. A dashed line in FIG. 4B indicates a desired shape, and a solid line indicates a shape of a three-dimensional shaped object that is actually shaped. In the example illustrated in FIG. 4B, the shaping layer contracts by being cooled after being shaped, so that a smaller shaping layer than the desired shape is shaped. Meanwhile, the shape error is a difference between the desired shape and the shaped shape and denoted by e.

FIG. 4C is an exemplary side view of the three-dimensional shaped object that is shaped in the shape as illustrated in FIG. 4A. The three-dimensional shaped object contracts by being cooled after being shaped, and therefore, the shape error occurs. In the correction process on the three-dimensional shaped object based on the feedback control, shapes of upper shaping layers are corrected on the basis of shapes of lower shaping layers, and therefore, the shape error is reduced in the upper shaping layers. In particular, the upper shaping layers are corrected on the basis of the shapes of the lower shaping layers that have contracted, so that the shape error is reduced with an increase in the number of times of deposition.

Further, a contraction process of the shaping layer depends on the shape of the shaping layer. Therefore, when the shapes of the upper and lower shaping layers are the same, and if the lower layer is shaped such that the lower layer has a desired shape after contraction, subsequent upper shaping layers can be shaped in desired shapes by applying the same correction algorithm as that of the lower shaping layers. Meanwhile, the same correction algorithm as that of the lower layer need not be applied only when the shapes of the upper and lower shaping layers are the same, but it may be possible to perform correction using the same algorithm as that of the lower shaping layer when the shapes of the shaping layers are similar to each other. For example, if a difference between the shapes of the upper and lower shaping layers is equal to or smaller than a predetermined threshold, it may be possible to assume that the contraction process goes in the same manner, and correct the upper shaping layer by using the same algorithm as that of the lower shaping layer.

In the three-dimensional shaped object illustrated in FIG. 4A, shapes of all of shaping layers of the cuboid portion Ma are the same, and shapes of all of shaping layers of the cylindrical portion Mb are the same. Therefore, a shaping error occurs in a lower part of the cuboid portion Ma, but an upper part of the cuboid portion Ma can be formed in a desired shape. Further, when a shape change between layers is remarkable, such as when a shaping portion is changed from the cuboid portion Ma to the cylindrical portion Mb, and if the correction algorithm of the cuboid portion Ma is applied to the cylindrical portion Mb, it may be difficult to perform appropriate correction immediately after the change, so that a shaping error occurs even in the lower part of the cylindrical portion Mb. Therefore, even when the shape error occurs in the shaping layer, it is preferable to reduce the number of times of deposition until convergence to the desired shape.

As described above, to improve the shaping accuracy of the three-dimensional shaped object, it is preferable to perform correction such that a desired shape can be obtained through a small number of times of deposition. Therefore, in each of embodiments described below, correction based on feedforward control is performed in addition to correction based on feedback control.

### First Embodiment

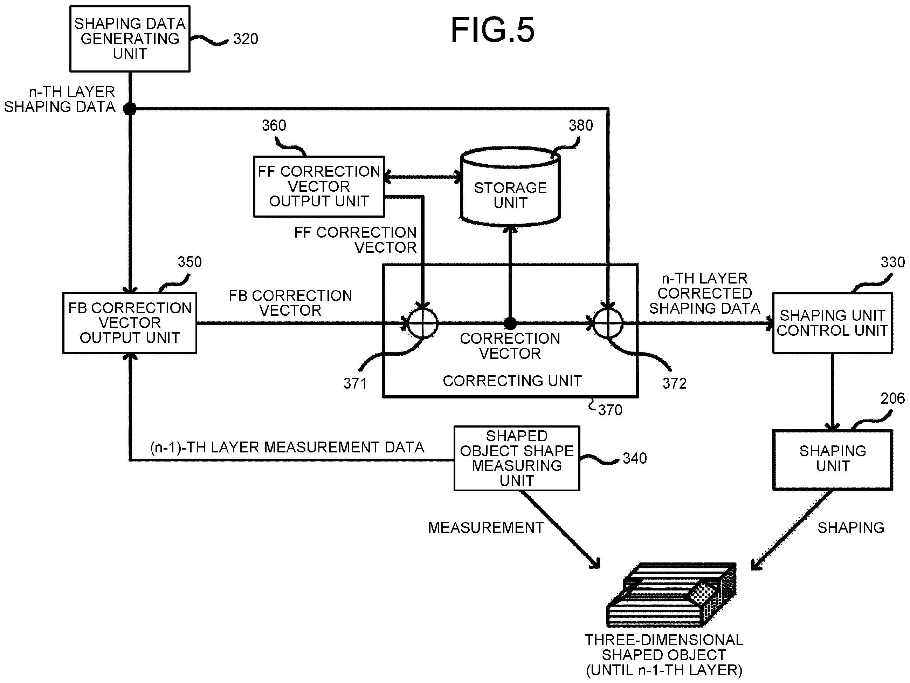

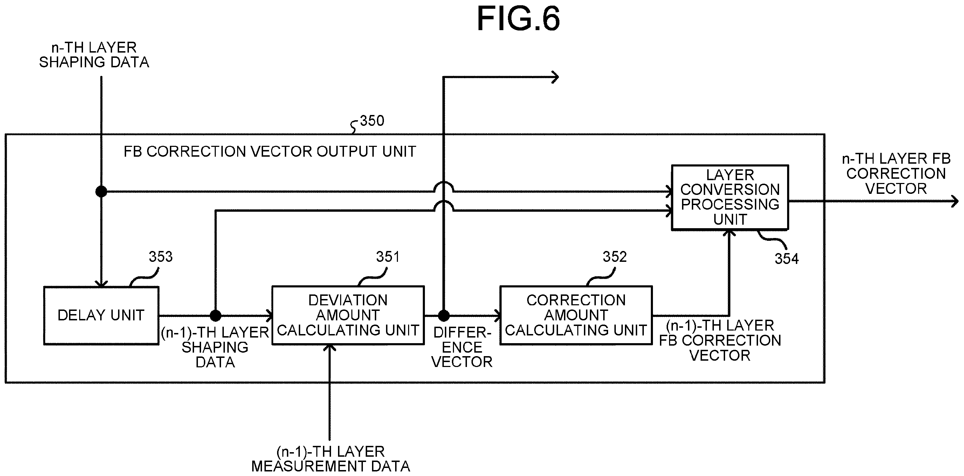

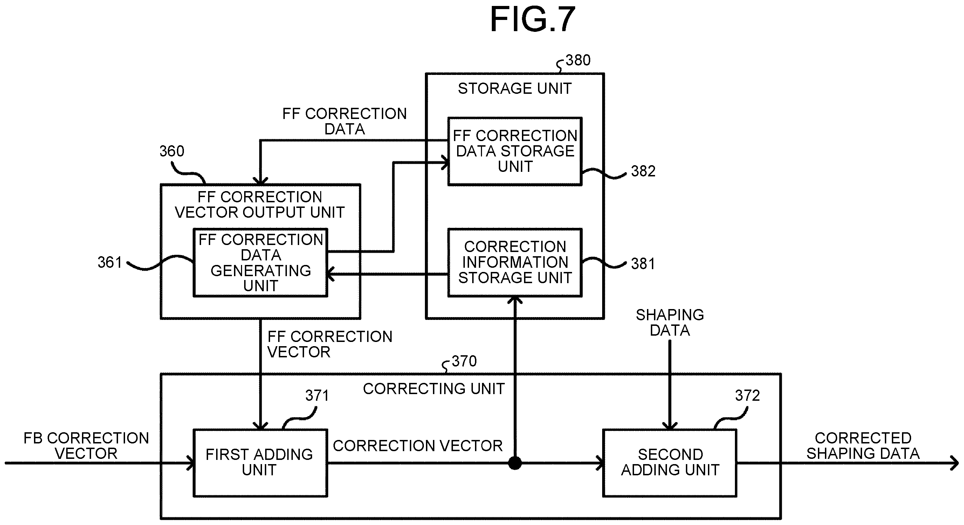

A data flow in a first embodiment will be described with reference to FIG. 5. FIG. 5 is a diagram illustrating the data flow in the first embodiment. FIG. 5 illustrates an example of correction that is performed when an n-th shaping layer is shaped after an (n-1)-th layer of a three-dimensional shaped object is shaped. In the following description of FIG. 5, FIG. 6 and FIG. 7 are appropriately referred to. FIG. 6 is a diagram for explaining a detailed data flow in the FB correction vector output unit 350. Further, FIG. 7 is a diagram for explaining a detailed data flow in the correcting unit 370.

The shaping data generating unit 320 outputs shaping data of each of layers that are generated based on the input shape data of the three-dimensional shaped object. The shaping data generating unit 320 outputs n-th layer shaping data to the FB correction vector output unit 350. Further, the shaped object shape measuring unit 340 outputs (n-1)-th layer measurement data to the FB correction vector output unit 350. The FB correction vector output unit 350 receives, as inputs, the n-th layer shaping data and the (n-1)-th layer measurement data, and outputs an FB correction vector to the correcting unit 370. Furthermore, the shaping data generating unit 320 outputs the n-th layer shaping data to the correcting unit 370. Moreover, the FF correction vector output unit 360 outputs the FF correction vector to the correcting unit 370. The correcting unit 370 receives, as inputs, the FB correction vector, the FF correction vector, and the n-th layer shaping data. The correcting unit 370 corrects the n-th layer shaping data based on the FB correction vector and the FF correction vector. The corrected shaping data is output as n-th corrected shaping data.

Here, in the FB correction vector output unit 350, as illustrated in FIG. 6, the deviation amount calculating unit 351 calculates a difference vector on the basis of (n-1)-th layer shaping data delayed by the delay unit 353 and the (n-1)-th layer measurement data. The difference vector indicates a shaping error of a shape of an actually-shaped shaping layer with respect to a shape of a desired shaping layer, and is calculated as a vector indicating a deviation amount. The correction amount calculating unit 352 calculates a feedback correction amount on the basis of the difference vector, and outputs it as an (n-1)-th layer FB correction vector. For example, if a shape of a certain shaping layer that has been shaped contracts after the shaping and is shaped with a smaller size than a desired shape, the correction amount calculating unit 352 calculates the FB correction vector such that the object can be shaped with a larger size than initial shaping data.

The layer conversion processing unit 354 calculates an n-th layer FB correction vector on the basis of the n-th layer shaping data, the (n-1)-th layer shaping data, and the (n-1)-th layer FB correction vector. For example, the layer conversion processing unit 354 is able to calculate the n-th layer FB correction vector by extracting a corresponding point in the shaping data of each of the layers in image processing and interpolating each of the corresponding points from the (n-1)-th layer correction vector. Accordingly, it is possible to shape a shaping layer that has a desired shape after contraction. Meanwhile, the FB correction vector output unit 350 may be configured to output the difference vector to the correction information storage unit 381.

As illustrated in FIG. 6, the FF correction vector output unit 360 causes the FF correction data generating unit 361 to analyze the FB correction vector of a shaping layer that has been shaped in the past and information on other kinds of correction, and generate the FF correction data for correcting a shaping layer to be shaped next or later. Specifically, as illustrated in FIG. 7, the FF correction data generating unit 361 generates the FF correction data in which a shape change due to contraction is predicted, by referring to a past correction vector or the like that is stored in the correction information storage unit 381.

Further, as illustrated in FIG. 7, the FF correction data generating unit 361 stores the generated FF correction data in the FF correction data storage unit 382. The FF correction vector output unit 360 reads the FF correction data stored in the FF correction data storage unit 382, multiplies the FF correction data by a predetermined FF gain, and outputs the FF correction vector to the first adding unit 371. Accordingly, the correcting unit 370 is able to correct the shaping data through the feedforward control.

The first adding unit 371 calculates the correction vector on the basis of the FB correction vector output from the FB correction vector output unit 350 and the FF correction vector output from the FF correction vector output unit 360. The correction vector is output to the second adding unit 372. The second adding unit 372 corrects the n-th layer shaping data on the basis of the correction vector. Then, the n-th corrected shaping data is output to the shaping unit control unit 330.

Referring back to FIG. 5, the corrected shaping data calculated by the second adding unit 372 is output to the shaping unit control unit 330. The shaping unit control unit 330 controls the shaping unit 206 and generates the n-th shaping layer on the basis of the n-th corrected shaping data.

In the example of the above-described embodiment, it is explained that the correcting unit 370 corrects the shape of the shaping data, but embodiments are not limited to this example. The correcting unit 370 is able to correct various parameters and algorithms for controlling a shaping process, such as temperature at which a three-dimensional shaped object is shaped, a moving speed of the head 110, or an ejection amount of the shaping material 140, in addition to correction of the shape of the shaping data.

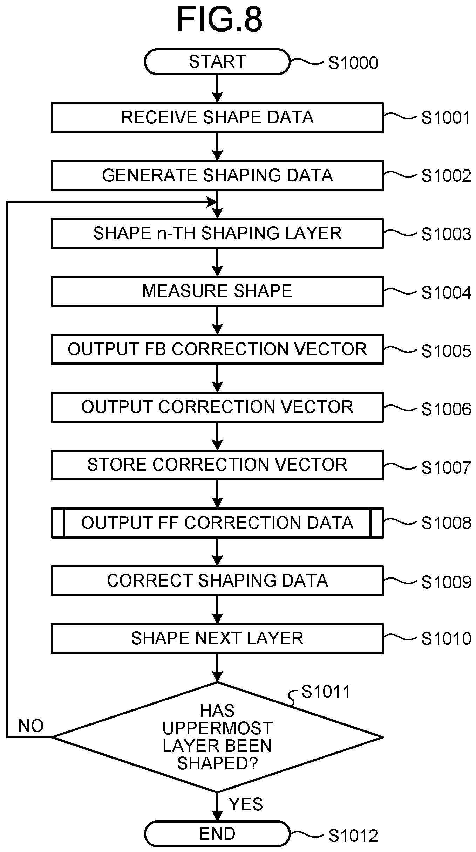

A process performed by the shaping device 100 will be described. FIG. 8 is a flowchart of the process performed by the shaping device 100. The shaping device 100 starts a shaping process at Step S1000. At Step S1001, the data input unit 310 receives input of shape data of a three-dimensional shaped object as a shaping target. Thereafter, at Step S1002, the shaping data generating unit 320 divides the shape data for each of shaping layers and generates shaping data. At Step S1003, the shaping unit control unit 330 controls the shaping unit 206 and shapes the n-th shaping layer (n is an integer equal to or larger than 1) based on the shaping data.

At Step S1004, the shaped object shape measuring unit 340 measures the shape of the shaping layer. Measurement data measured by the shaped object shape measuring unit 340 is output to the FB correction vector output unit 350.

At Step S1005, the FB correction vector output unit 350 outputs the FB correction vector. Specifically, the FB correction vector is calculated by first obtaining a difference between the measurement data and the shaping data of the measured shaping layer, and subsequently obtaining a correction amount. The calculated FB correction vector is output to the correcting unit 370.

At Step S1006, the correcting unit 370 outputs the correction vector. Specifically, the first adding unit 371 of the correcting unit 370 calculates the correction vector on the basis of the FB correction vector and the FF correction vector. The FF correction vector is output by causing the FF correction vector output unit 360 to read the FF correction data from the FF correction data storage unit 382 and multiply the FF correction data by an appropriate FF gain.

At Step S1007, the correction vector calculated at Step S1006 is output from the first adding unit 371 and stored in the correction information storage unit 381.

Thereafter, at Step S1008, the FF correction data output unit 360 outputs the FF correction data. Specifically, the FF correction data generating unit 361 generates the FF correction data. The FF correction data generating unit 361 analyzes the correction vector that is stored in the correction information storage unit 381 at Step S1007, and generates correction data for performing FF correction. The FF correction data generating unit 361 stores the generated FF correction data in the FF correction data storage unit 382. The process of generating the FF correction data at Step S1008 need not always be performed at a timing as indicated in FIG. 8, but may be performed in the background parallel to each of the processes as illustrated in FIG. 8, for example.

At Step S1009, the correcting unit 370 corrects the shaping data. Specifically, the second adding unit 372 calculates the corrected shaping data on the basis of the correction vector and the shaping data. The calculated corrected shaping data is output to the shaping unit control unit 330. Then, at Step S1010, the shaping unit control unit 330 controls the shaping unit 206 and shapes a next shaping layer on the basis of the corrected shaping data.

Thereafter, at Step S1011, the shaping device 100 separates the process depending on whether an uppermost shaping layer has been shaped. If the uppermost shaping layer has been shaped (YES), that is, if the three-dimensional shaped object is completed, the process proceeds to Step S1012, and the shaping device 100 terminates the process. If the uppermost shaping layer has not been shaped (NO), that is, if the three-dimensional shaped object is not completed, the process returns to Step S1003, and shaping is performed again. Then, the processes from Step S1003 to S1010 as described above are repeated until the three-dimensional shaped object is completed. Meanwhile, it may be possible to return the process to Step S1001, and start the process again. Further, the correction process may be performed on all of shaping layers from the lowermost layer, or may be performed on upper layers located above an arbitrary shaping layer.

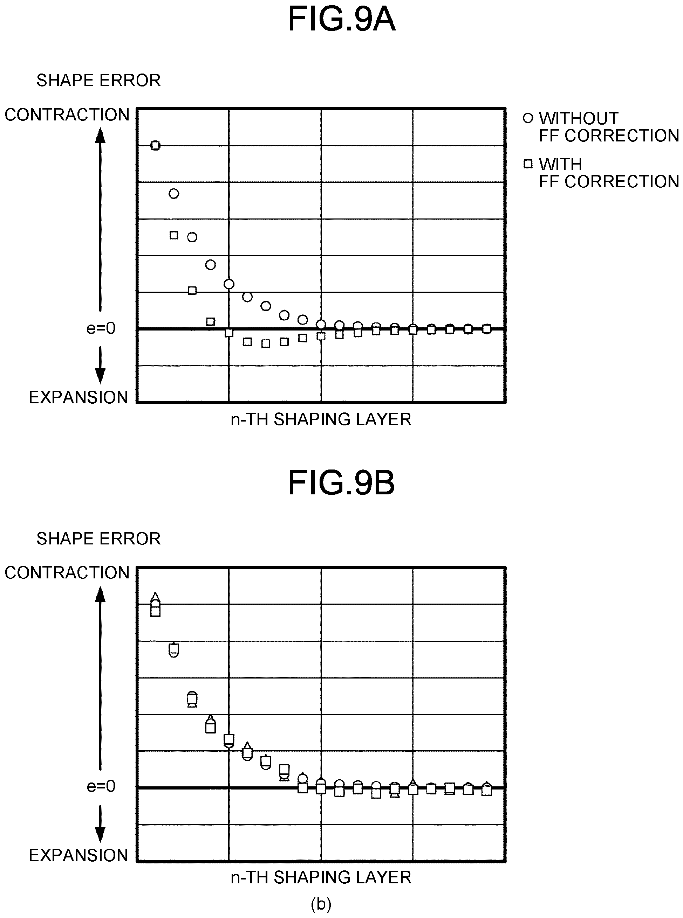

Through the process as described above, the shaping device 100 is able to reduce shaping layers for which shape errors occur and shape a desired three-dimensional shaped object. FIGS. 9A and 9B are diagrams for explaining a shape error depending on whether the FF correction of the first embodiment is performed. FIG. 9A is a graph of comparison of a shape error that occurs when the FF correction is performed with a shape error that occurs when the FF correction is not performed, and FIG. 9B is a graph of variation of the shape error that occurs when a three-dimensional shaped object with the same shape is shaped a plurality of number of times. In each of the drawings, the horizontal axis represents the number of times of deposition, and the vertical axis represents the shape error. Further, "e=0" in the drawings indicates that a shaping layer with a desired shape is shaped.

In FIG. 9A, plots represented by circles (○) indicate shape errors that occur when only the FB correction is performed, and plots represented by squares (□) indicate shape errors that occur when both of the FB correction and the FF correction of the first embodiment are performed. As illustrated in FIG. 9A, it is indicated that, when the FF correction of the first embodiment is performed, the shape error converges to zero through a smaller number of times of deposition and the shaping accuracy of the three-dimensional shaped object is improved as compared to the case where only the FB correction is performed.

Further, even when three-dimensional shaped objects with the same shapes are shaped, shape errors are not always the same due to various error causes, and the shape errors may vary as illustrated in FIG. 9B. Therefore, in the preferred embodiment, it may be possible to store the FF correction data on three-dimensional shaped objects that have been shaped in the past in the FF correction data storage unit 382 and statistically calculate the FF correction vector. The FF correction vector output unit 360 is able to statistically calculate the FF correction vector by obtaining an average value or a median value of the stored FF correction data, for example.

### Second Embodiment

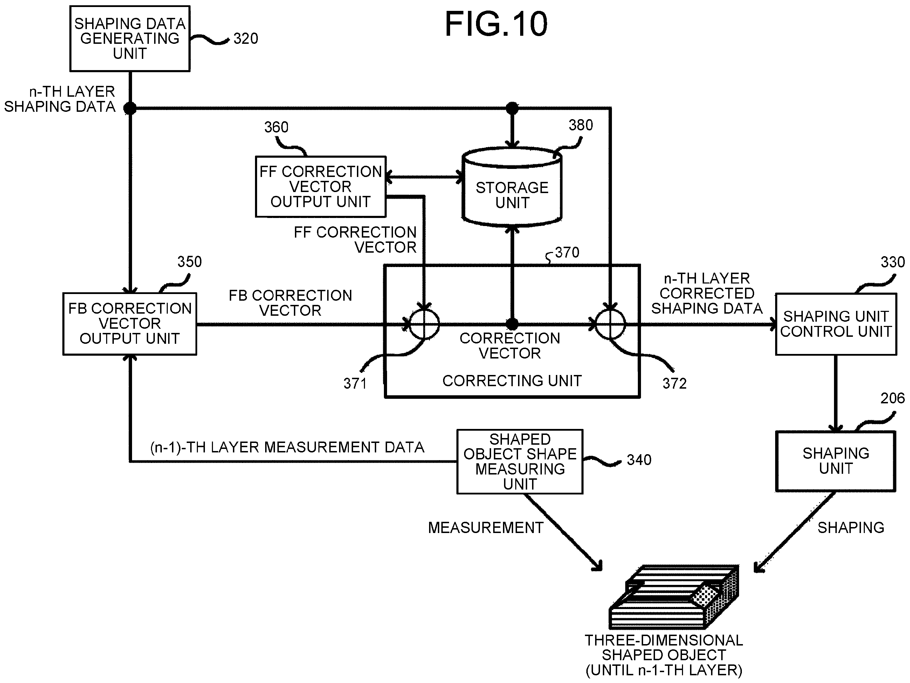

FIG. 10 is a diagram illustrating a data flow in a second embodiment. In the second embodiment, the shaping data generated by the shaping data generating unit 320 is stored in the correction information storage unit 381, in addition to the configuration of the first embodiment. In the second embodiment, the FF correction data generating unit 361 generates the FF correction data on the basis of the correction vector and the shaping data. Explanation of the configurations described in the first embodiment will be appropriately omitted.

It has been described above that when the shape of the shaping layer is the same as the shape of the shaping layer that has already been shaped, correction is performed using the same correction algorithm. With this configuration, the shaping device 100 is able to cause the shape error to converge to zero through a smaller number of times of deposition, so that it is possible to shape a desired three-dimensional shaped object. In particular, when a plurality of shaping layers with the same shapes are sequentially deposited, it is possible to further reduce the number of times of deposition until convergence by generating the FF correction data on the basis of a correction vector of a shaping layer that has been shaped most recently. Therefore, in the second embodiment, the correction vector and the shaping data are stored in the correction information storage unit 381, and the FF correction data generating unit 361 generates the correction data from the shape of each of shaping layers based on the shaping data.

For example, a case will be described in which an i-th shaping layer to an (i+j)-th shaping layer have the same shapes. In this case, the correction information storage unit 381 acquires shaping data of each of the shaping layers from the shaping data generating unit 320, and stores the shaping data in association with each of sequentially-output correction vectors of the shaping layers. The FF correction data generating unit 361 compares a shape of the i-th layer and a shape of an (i+1)-th layer, and if the shapes are the same, correction data of the (i+1)-th layer is generated based on correction data of the i-th layer.

Thereafter, similarly, when correction data of an (i+2)-th layer is to be generated, the shape of the i-th layer, the shape of the (i+1)-th layer, and a shape of the (i+2)-th layer are compared, and if the shapes are the same, the correction data of the (i+2)-th layer is generated based on the correction data of the (i+1)-th layer.

In this manner, in the second embodiment, the FF correction data generating unit 361 generates the FF correction data on the basis of the correction vector of the shaping layer that has been shaped most recently among shaping layers with the same shapes. Accordingly, the shaping device 100 is able to reduce the number of times of deposition until the shape error converges to zero. Meanwhile, when it is determined whether the shapes are the same by comparing the shaping layers, it may be possible to determine that the shapes are the same if a shape difference is smaller than a threshold.

The FF correction data generating unit 361 may determine whether the shape error has converged on the basis of the number of times that the same correction algorithm is continuously applied. For example, the FF correction data generating unit 361 may determine that the shape error has converged if the number of times that the same correction algorithm is applied exceeds a threshold. If the FF correction data generating unit 361 determines that the shape error has converged, it is possible to generate the FF correction data by performing a statistical process on the correction data of the shaping layers that have the same shapes and that have been shaped in the past, and on the basis of a statistic, such as an average value or a median value. Consequently, it is possible to cope with variation of the shape error, and shape a three-dimensional shaped object with stable quality.

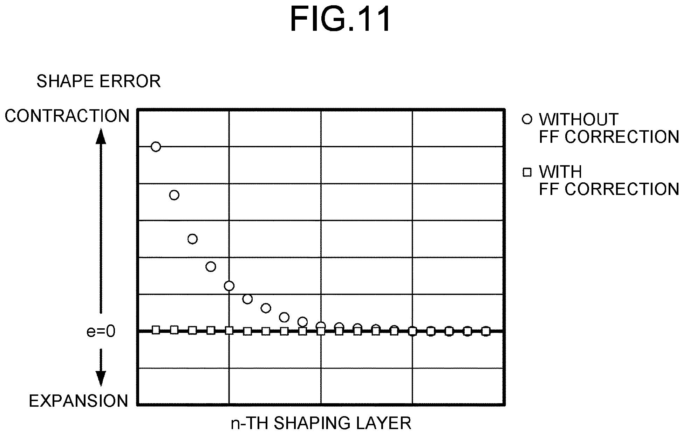

FIG. 11 is a diagram for explaining a shape error depending on whether the FF correction of the second embodiment is performed. In FIG. 11, plots represented by circles (○) indicate shape errors that occur when only the FB correction is performed, and plots represented by squares (□) indicate shape errors that occur when both of the FB correction and the FF correction of the second embodiment are performed. As illustrated in FIG. 11, it is indicated that, when the FF correction of the second embodiment is performed, the shape error can hardly occur and a desired three-dimensional shaped object is shaped. Further, it is indicated that, when the FF correction of the second embodiment is performed, the shape error reaches zero through a smaller number of times of deposition and the shaping accuracy of the three-dimensional shaped object is improved as compared to the case where the FF correction of the first embodiment as illustrated in FIG. 9A is performed.

### Third Embodiment

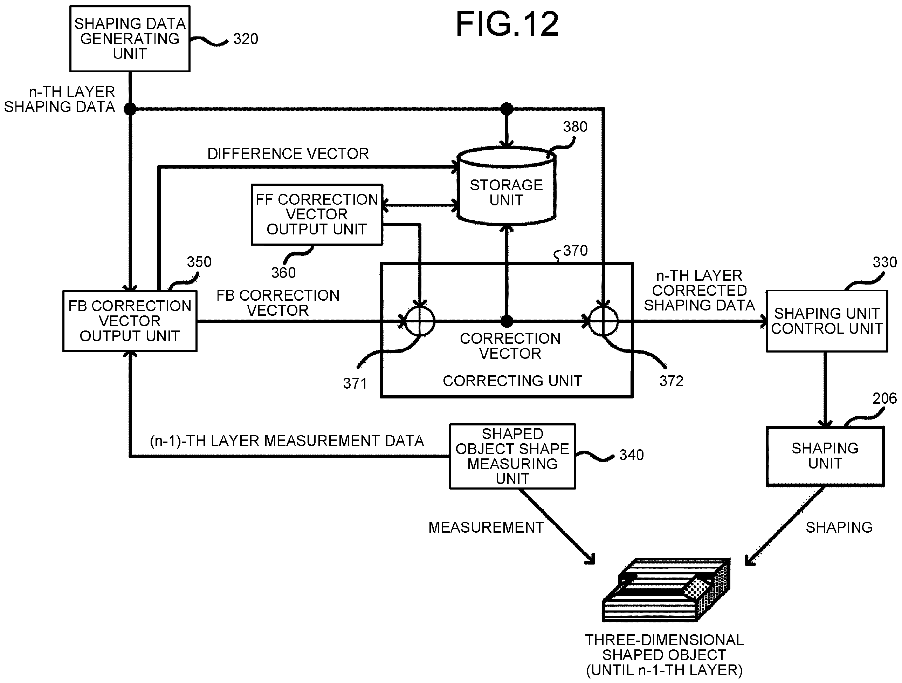

FIG. 12 is a diagram illustrating a data flow according to a third embodiment. In the third embodiment, the difference vector calculated by the deviation amount calculating unit 351 of the FB correction vector output unit 350 is further stored in the correction information storage unit 381, in addition to the configuration of the second embodiment. In the third embodiment, the FF correction data generating unit 361 generates the FF correction data on the basis of the correction vector, the shaping data, and the difference vector. Explanation of the configurations described in the first embodiment and the second embodiment will be appropriately omitted.

In the third embodiment, as illustrated in FIG. 6 and FIG. 12, the deviation amount calculating unit 351 outputs the calculated difference vector to the correction amount calculating unit 352 and the correction information storage unit 381. Therefore, the FF correction data generating unit 361 is able to determine whether the FB correction has converged on the basis of a size of the difference vector. According to the third embodiment, the FF correction data generating unit 361 is able to generate the FF correction data on the basis of the correction vector for which the FB correction has converged, so that the shaping device 100 is able to perform appropriate FF correction and shape a desired three-dimensional shaped object.

### Fourth Embodiment

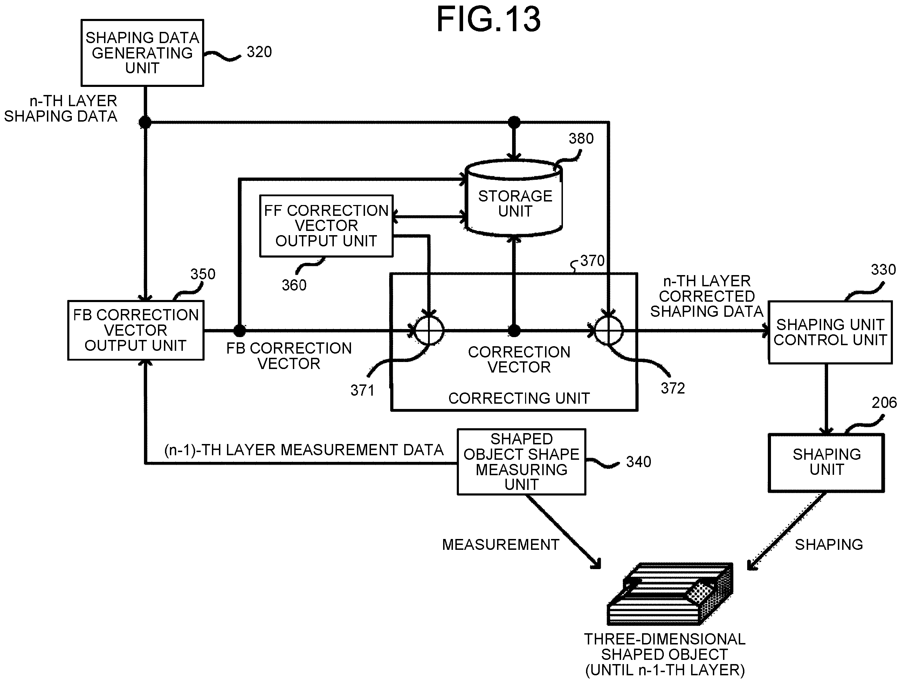

FIG. 13 is a diagram illustrating a data flow according to a fourth embodiment. In the fourth embodiment, the FB correction vector output by the FB correction vector output unit 350 is further stored in the correction information storage unit 381, in addition to the configurations of the second embodiment. In the fourth embodiment, the FF correction data generating unit 361 generates the FF correction data on the basis of the correction vector, the shaping data, and the FB correction vector. Explanation of the configurations described in the first embodiment and the second embodiment will be appropriately omitted.

According to the fourth embodiment, the FF correction data generating unit 361 is able to determine whether the FB correction has converged on the basis of a change amount between shaping layers of the FB correction vector. Therefore, the FF correction data generating unit 361 is able to generate the FF correction data on the basis of the correction vector for which the FB correction has converged, so that the shaping device 100 is able to perform appropriate FF correction and shape a desired three-dimensional shaped object.

As described above, according to each of the embodiments of the present invention, it is possible to provide a shaping device, a system, and a method for shaping a desired three-dimensional shaped object.

Each of the functions of each of the embodiments of the present invention as described above may be implemented by a device executable program that is written by C, C++, C#, Java (registered trademark), or the like, and the program of the present embodiment may be distributed by being stored in a device readable recording medium, such as a hard disk device, a compact disk-ROM (CD-ROM), a ROM, a magneto-optical disk (MO), a digital versatile disk (DVD), a flexible disk, an electrically erasable programmable ROM (EEPROM), or an erasable programmable ROM (EEROM), or may be transferred via a network in a format that can be handled by a device.

As described above, according to an embodiment, it is possible to provide a shaping device, a system, and a method recording medium for shaping a desired three-dimensional shaped object.

The above-described embodiments are illustrative and do not limit the present invention. Thus, numerous additional modifications and variations are possible in light of the above teachings. For example, at least one element of different illustrative and exemplary embodiments herein may be combined with each other or substituted for each other within the scope of this disclosure and appended claims. Further, features of components of the embodiments, such as the number, the position, and the shape are not limited the embodiments and thus may be preferably set. It is therefore to be understood that within the scope of the appended claims, the disclosure of the present invention may be practiced otherwise than as specifically described herein.

The method steps, processes, or operations described herein are not to be construed as necessarily requiring their performance in the particular order discussed or illustrated, unless specifically identified as an order of performance or clearly identified through the context. It is also to be understood that additional or alternative steps may be employed.

Further, any of the above-described apparatus, devices or units can be implemented as a hardware apparatus, such as a special-purpose circuit or device, or as a hardware/software combination, such as a processor executing a software program.

Further, as described above, any one of the above-described and other methods of the present invention may be embodied in the form of a computer program stored in any kind of storage medium. Examples of storage mediums include, but are not limited to, flexible disk, hard disk, optical discs, magneto-optical discs, magnetic tapes, nonvolatile memory, semiconductor memory, read-only-memory (ROM), etc.

Alternatively, any one of the above-described and other methods of the present invention may be implemented by an application specific integrated circuit (ASIC), a digital signal processor (DSP) or a field programmable gate array (FPGA), prepared by interconnecting an appropriate network of conventional component circuits or by a combination thereof with one or more conventional general purpose microprocessors or signal processors programmed accordingly.

Each of the functions of the described embodiments may be implemented by one or more processing circuits or circuitry. Processing circuitry includes a programmed processor, as a processor includes circuitry. A processing circuit also includes devices such as an application specific integrated circuit (ASIC), digital signal processor (DSP), field programmable gate array (FPGA) and conventional circuit components arranged to perform the recited functions.

## Claims

1. A shaping device configured to shape a three-dimensional shaped object, the shaping device comprising:
a measuring unit configured to measure a shape of a shaping layer; and
a correcting unit configured to correct operation of shaping a shaping layer, according to a first correction amount based on a measurement result of the measuring unit and a second correction amount in accordance with a past correction.

2. The shaping device according to claim 1, wherein the second correction amount is generated based on a shape of a shaping layer that has been shaped in a past.

3. The shaping device according to claim 2, wherein the second correction amount is generated based on a difference between a shape measured by the measuring unit and a shape of a shaping layer that is a measurement target.

4. The shaping device according to claim 2 or 3, wherein the second correction amount is generated based on the first correction amount.

5. The shaping device according to any one of claims 1 to 4, wherein the second correction amount is calculated based on a statistic of third correction amounts with which corrections for respective shaping layers that have been shaped in a past have been performed.

6. The shaping device according to claim 5, wherein the statistic is an average value.

7. The shaping device according to claim 5, wherein the statistic is a median value.

8. A system configured to shape a three-dimensional shaped object, the system comprising:
a measuring unit configured to measure a shape of a shaping layer; and
a correcting unit configured to correct operation of shaping a shaping layer, according to a first correction amount based on a measurement result of the measuring unit and a second correction amount in accordance with a past correction.

9. A method implemented by a shaping device configured to shape a three-dimensional shaped object, the method comprising:
measuring a shape of a shaping layer; and
correcting operation of shaping the shaping layer, according to a first correction amount based on a measurement result at the measuring and a second correction amount in accordance with a past correction.
